(19) **Europäisches Patentamt European Patent Office Office européen des brevets**

(11) **EP 4 118 304 B1**

(12) **FASCICULE DE BREVET EUROPEEN**

(45) Date de publication et mention
de la délivrance du brevet:
**31.01.2024 Bulletin 2024/05**

(21) Numéro de dépôt: **21716796.4**

(22) Date de dépôt: **08.03.2021**

(51) Classification Internationale des Brevets (IPC):
**F01D 5/18** *(2006.01)* **F01D 9/06** *(2006.01)*
**B22F 5/00** *(2006.01)* **B22F 5/04** *(2006.01)*

(52) Classification Coopérative des Brevets (CPC):
**F01D 9/065; B22F 5/009; B22F 5/04; B22F 10/00;
B33Y 80/00; F01D 5/187;** F05D 2230/22;
F05D 2230/234; F05D 2230/31; F05D 2250/20;
F05D 2250/221; F05D 2250/26; F05D 2250/27;
F05D 2250/28; F05D 2250/282; (Cont.)

(86) Numéro de dépôt international:
**PCT/FR2021/050390**

(87) Numéro de publication internationale:
**WO 2021/181038 (16.09.2021 Gazette 2021/37)**

(54) **AUBE CREUSE DE TURBOMACHINE**

TURBOMASCHINENHOHLSCHAUFEL

TURBOMACHINE HOLLOW BLADE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.03.2020 FR 2002509**

(43) Date de publication de la demande:
**18.01.2023 Bulletin 2023/03**

(73) Titulaire: **Safran Helicopter Engines
64510 Bordes (FR)**

(72) Inventeurs:
• **VIAL, Laurence
77550 MOISSY-CRAMAYEL (FR)**
• **FRELON, Bruno
77550 MOISSY-CRAMAYEL (FR)**
• **BEUGNIEZ, Jérôme
77550 MOISSY-CRAMAYEL (FR)**
• **BELLOT, Yann
77550 MOISSY-CRAMAYEL (FR)**

(74) Mandataire: **Gevers & Orès
Immeuble le Palatin 2
3 Cours du Triangle
CS 80165
92939 Paris La Défense Cedex (FR)**

(56) Documents cités:
**EP-A1- 3 015 647 US-A1- 2014 014 493
US-A1- 2014 079 540 US-A1- 2018 187 984**

**EP 4 118 304 B1**

(52) Classification Coopérative des Brevets (CPC):
(Cont.)
Y02P 10/25

## Description

### Domaine technique de l'invention

L'invention concerne les aubes creuses de turbomachine, notamment les aubes de distributeur pour une turbine haute pression, qui sont refroidies par un flux d'air circulant dans les cavités intérieures de ces aubes.

### Arrière-plan technique

L'état de la technique comprend notamment le document US-A1-2014/0079540.

Un distributeur haute pression d'une turbomachine comporte une rangée annulaire d'aubes comprise entre une couronne interne et une couronne externe formant la veine dans laquelle passe l'air sortant de la chambre de combustion. Sa structure est soumise à des températures très élevées. Pour cette raison, les aubes du distributeur sont généralement creuses et leurs parois, contournées par l'air de la veine réchauffé dans la chambre de combustion, sont refroidies par un flux d'air circulant à l'intérieur de la cavité interne. Selon l'état de l'art, un insert est placé dans la cavité et il est percé de trous pour répartir l'air de refroidissement vers les parois de la pale de l'aube. L'air de refroidissement forme un jet en traversant chaque trou d'insert qui permet de refroidir la paroi de l'aube par impact sur la face interne de la paroi. Suivant les procédés, un distributeur peut être fabriqué d'un seul bloc ou par assemblage d'éléments qui comportent une ou plusieurs aubes, une aube comportant généralement une pale avec des plateformes formant une portion de couronne interne et de couronne externe qui les supporte. Conventionnellement, la fabrication de ces éléments est faite par fonderie et usinage. Notamment à cause de l'insert, cette fabrication est complexe et coûteuse.

La fabrication additive offre une alternative intéressante pour réaliser les éléments du distributeur. De manière connue, la fabrication additive d'une pièce se fait par exemple par fusion laser de couches successives d'une poudre du matériau formant la pièce. En particulier, la fabrication additive permet d'envisager des formes plus adaptées de l'insert pour mieux répartir le refroidissement, voire aussi optimiser la forme des pales.

Cependant, la fabrication additive ne permet pas de réaliser des parties suspendues, ce qui est notamment le cas de l'insert. Pour réaliser des parties suspendues, il faut anticiper et placer des supports permettant de maintenir ces parties suspendues le temps que les couches formant les parties de la pièce maintenant lesdites parties suspendues soient réalisées. Les supports doivent ensuite être éliminés en fin de fabrication.

De manière plus générale, pour la fabrication additive, les parties dites suspendues sont aussi les surfaces inférieures de la pièce par rapport à la direction de progression des couches de fabrication, qui font un angle inférieur à 30° avec le plan des couches de fabrication.

Que ce soit pour l'insert ou pour la fabrication de l'aube avec les portions de couronnes externe et interne qui la supportent, on trouve généralement ces deux types de configuration de portions dites suspendues, ce qui nécessite l'utilisation de supports en cours de processus. Cela complexifie la fabrication additive d'un distributeur et peut la rendre moins applicable.

L'invention a pour but de proposer un nouveau type d'aube creuse pouvant être réalisé par fabrication additive en surmontant la difficulté des supports en cours de fabrication.

Un second but de l'invention est d'optimiser le refroidissement des aubes par un flux d'air circulant dans leurs cavités.

### Résumé de l'invention

A cet effet, l'invention concerne une aube creuse de turbomachine, comportant au moins une pale ayant des parois latérales destinées à guider autour de la pale un écoulement dans une veine et fixées sur une première plateforme à une première extrémité longitudinale de la pale, la pale comportant en outre une cavité interne entre les parois latérales, destinée à faire passer un fluide de refroidissement de la pale, avec une ouverture d'arrivée du fluide débouchant au travers de ladite première plateforme, caractérisée en ce qu'un réseau de surface gyroïde remplit au moins une partie de la cavité en étant agencé pour y guider le fluide de refroidissement et est en contact avec au moins une partie des parois latérales.

Le réseau de surface gyroïde, dont une description succincte est donnée plus loin est une surface qui sépare l'espace en deux canaux séparés permettant le passage d'un fluide. Il peut donc être agencé pour guider le fluide circulant à l'intérieur vers les parois latérales de la pale afin d'en favoriser le refroidissement.

De plus, la surface gyroïde maximise la surface de contact avec le fluide tout en formant des canaux de passage du fluide n'ayant pas des coudes très fermés. Cela a deux effets complémentaires pour la fonction d'échange thermique avec le fluide de refroidissement. D'une part, un réseau de surface gyroïde en matériau conducteur peut transmettre facilement au fluide la chaleur qu'il pompe par conduction sur les parois latérales chaudes avec lesquelles il est en contact. D'autre part, la forme des canaux induit une perte de charge faible, ce qui minimise l'énergie qui doit être consacrée à faire circuler le fluide de refroidissement au travers de l'échangeur.

Par ailleurs, par ses propriétés géométriques, la surface gyroïde est autoporteuse vis à vis des contraintes de fabrication par une méthode additive. Le fait que le réseau de surface gyroïde soit en contact au moins en certains endroits avec les parois de la pale permet également de supporter ces parois lors de la fabrication additive si certaines de leur portion se trouvent en situation « suspendue » à un moment donné du processus de fabrication.

Par ailleurs, la surface gyroïde est formée par reproduction dans les trois dimensions d'espace d'une maille cubique élémentaire. Avantageusement cette maille élémentaire cubique peut être orientée de manière sensiblement parallèle à la direction longitudinale.

Avantageusement, le réseau de surface gyroïde s'étend sur la totalité de l'extension longitudinale de la pale et débouche dans l'ouverture pratiquée dans la première plateforme, de manière à guider le flux de fluide de refroidissement dès son arrivée dans la pale.

Par ailleurs, les parois latérales de la pale peuvent être fixées sur une deuxième plateforme, à une deuxième extrémité longitudinale, et le réseau de surface gyroïde peut être alors en appui sur la deuxième plateforme, entre les parois latérales.

Cela peut être avantageux notamment pour permettre le supportage du réseau et/ou d'autres éléments de la pale lors de phases de fabrication par une méthode additive.

Avantageusement, le réseau de surface gyroïde séparant l'espace en deux canaux séparés par lesquels le fluide de refroidissement peut s'écouler, les parois latérales de la pale forment une partie des parois desdits canaux en coupant le réseau de surface gyroïde.

Cela favorise les échanges thermiques entre le fluide et les parois de la pale. Le réseau de surface gyroïde peut avoir une structure homogène sur l'ensemble de la cavité mais d'autres variantes de conception de ce réseau sont concevables.

Par exemple, le réseau de surface gyroïde étant formé à partir d'une maille cubique élémentaire, la taille de la maille peut évoluer en fonction de la position dans la cavité, par exemple diminuer du centre de la cavité vers les parois latérales.

De même, l'épaisseur de paroi de la surface gyroïde peut être variable, par exemple diminuer du centre de la cavité vers les parois latérales.

Ces variantes dépendront des choix de l'homme du métier par exemple pour mieux guider le fluide de refroidissement vers les régions les plus chaudes des parois de la pale et/ou améliorer la tenue mécanique du réseau dans l'aube en fonctionnement.

Le réseau de surface gyroïde peut occuper la totalité ou la quasi-totalité de la cavité.

Selon une variante, l'aube comprend un insert dans la cavité et le réseau de surface gyroïde occupe un espace situé entre l'insert et les parois latérales de la pale.

Dans cette variante, l'insert peut être dimensionné pour coopérer avec le réseau de surface gyroïde pour mieux répartir le fluide de refroidissement vers les parois de la pale. Par ailleurs, la présence du gyroïde sert de support à l'insert en position suspendue lors du processus de fabrication additive.

L'aube peut comporter des appendices tels que pontets, picots, ailettes, trous, en contact avec le réseau de surface gyroïde, notamment pour des raisons de tenue mécanique dudit réseau.

Avantageusement, une telle aube est formée d'une seule pièce obtenue par fabrication additive.

L'invention concerne également un stator aubagé de turbomachine, notamment un distributeur de turbine haute pression, comprenant une aube telle que décrite précédemment.

L'invention concerne aussi une turbomachine comprenant une aube ou un stator aubagé décrits précédemment.

**Brève description des figures**

D'autres caractéristiques et avantages de l'invention apparaitront au cours de la lecture de la description détaillée qui va suivre pour la compréhension de laquelle on se reportera aux dessins annexés dans lesquels :

[Fig. 1] la figure 1 est une vue schématique d'une coupe selon un plan perpendiculaire à l'axe de symétrie d'une portion de distributeur selon l'état de l'art, sans insert ;

[Fig. 2] la figure 2 est une vue schématique d'une portion de distributeur selon l'état de l'art correspondant à celle de la figure 1, vue en transparence suivant la direction axiale avec un insert ;

[Fig. 3] la figure 3 est une vue schématique en perspective d'une aube creuse selon l'invention, en transparence pour montrer la surface gyroïde disposée à l'intérieur de l'aube ;

[Fig. 4-5] les figures 4 et 5 montrent des vues sous deux angles différents de la maille cubique élémentaire d'un gyroïde ;

[Fig. 6] la figure 6 montre schématiquement une coupe transverse d'une variante d'aube selon l'invention ; et

[Fig. 7] la figure 7 montre schématiquement une autre variante de pale selon l'invention, coupée selon un plan transversal, sans la surface gyroïde qui y serait disposée.

**Description détaillée de l'invention**

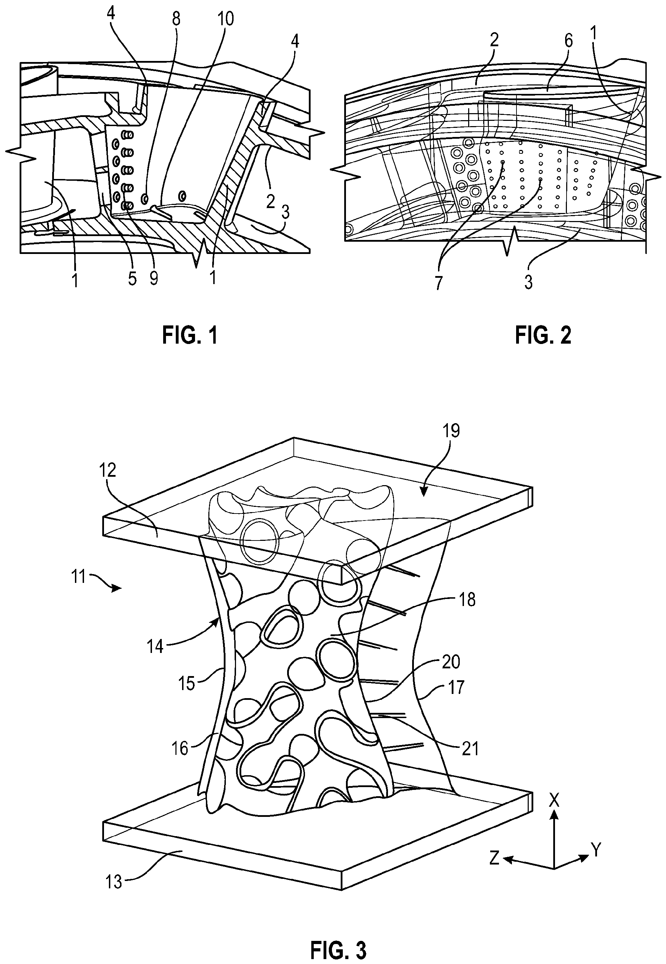

Les figures 1 et 2 montrent une portion angulaire de distributeur fabriquée de manière classique. Les aubes comportent des pales 1 creuses fabriquées dans la masse avec les couronnes externe 2 et interne 3 délimitant la veine. Au raccord avec la couronne externe 2, les parois de la pale de l'aube se prolongent en une cheminée 4 formant un passage pour un flux d'air interne de refroidissement. Ce flux d'air est évacué par des évents 5 au bord de fuite. Un insert 6 suivant les formes intérieures des parois de la pale 1 guide l'air arrivant par la cheminée 4 et le répartit vers les parois au travers de trous 7 pour assurer le refroidissement. La forme des pales 1 est ici assez simple. Par ailleurs, on voit un ensemble de structures, plots 8, pontets 9 ou réglettes 10, disposées à l'intérieur des parois pour positionner et maintenir l'insert 6.

La figure 3 montre une aube creuse 11 de distributeur selon l'invention, obtenue par fabrication additive, avec une plateforme externe 12 et une plateforme interne 13 auxquelles se raccordent les parois 15 de la pale 14. Suivant les méthodes de fabrication du distributeur, l'aube 11 peut comporter une pale 14 dont les plateformes 12 et 13 servent à l'assemblage sur le distributeur ou comporter une ou plusieurs pales 14 raccordées par ces plateformes 12 et 13 qui forment une portion des éléments de couronnes externe et interne.

Ici, la direction longitudinale de la pale 14 correspond sensiblement à la direction radiale X par rapport à un axe de symétrie Z du distributeur. La corde de la pale 14 suit une direction transversale située dans un plan défini par la direction axiale Z et la direction tangentielle Y au niveau de la pale.

Ici, les parois 15 de la pale 14 forment une cavité interne qui débouche au travers de la plateforme externe et qui s'étend sur toute l'extension longitudinale de la pale 14 entre les deux plateformes 12 et 13. Le profil de la pale 14 selon un plan de coupe transversal a une forme incurvée. Par ailleurs, la pale 14 a une forme cintrée suivant la direction radiale X. Cette forme est optimisée pour les performances aérodynamiques du distributeur et améliorer le rendement de la turbine haute pression (HP) à laquelle il appartient.

La forme du profil transversal de la pale 14 fait que la cavité est large au voisinage du bord d'attaque 16 et étroite au voisinage du bord de fuite 17. Une surface gyroïde 18 remplit la cavité interne sur toute l'extension radiale de la pale 14, entre les deux plateformes 12 et 13.

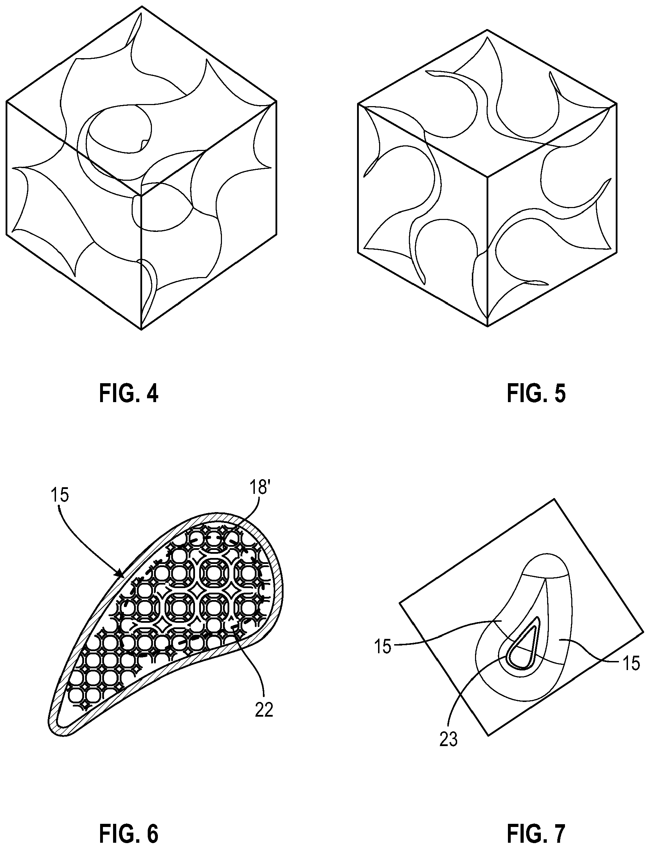

Le gyroïde est une surface minimale sans auto-intersection construite en reproduisant de manière périodique dans les trois dimensions une maille élémentaire incluse dans un cube, illustrée sur les figures 4 et 5. Le gyroïde est le seul membre intégré non trivial de la famille associée des surfaces Schwarz P et D avec un angle d'association d'environ 38,01 °. On peut trouver une description rigoureuse du gyroïde et des surfaces Schwarz P et D dans le document NASA TN D-5541, de mai 1974, écrit par le scientifique Alan Schoen. La surface représentant le gyroïde sur les figures 4 et 5 a été tracée, avec une bonne précision, en utilisant une approximation trigonométrique donnée par une courte équation :

[MATH.1]

$$\sin x \cos y + \sin y \cos z + \sin z \cos x = 0$$

Le gyroïde sépare l'espace en deux labyrinthes de passages opposés. Des canaux parcourent les labyrinthes gyroïdes suivant deux directions et des passages émergent à des angles de 70,5 degrés par rapport à un canal donné lors de son franchissement sur l'une des faces du cube. Comme on peut le voir plus facilement sur les figures 3 et 6, les orifices des canaux suivant des plans de coupe parallèles aux côtés des mailles élémentaires sont très proches d'une forme circulaire.

L'inclinaison des parois du gyroïde qui reste globalement supérieure à l'angle de 30° aux intersections avec les parois du cube de la maille élémentaire en permet une fabrication additive couche par couche en démarrant d'un plan parallèle à une face du cube de la maille élémentaire.

Sur l'exemple de la figure 3, la surface gyroïde 18 est construite en reproduisant, de manière homogène dans toute la cavité de la pale 14, une maille élémentaire avec la même taille. La surface gyroïde 18 est en contact avec la surface de la plateforme interne 13, qui ferme la cavité à son intersection avec les parois 15 de la pale 14, et s'étend jusqu'à l'ouverture 19 de la cavité dans la plateforme externe 12, destinée à amener l'air de refroidissement.

Latéralement, la surface gyroïde 18 entre en contact avec les surfaces internes des parois 15 de la pale 14, du bord d'attaque 16 jusqu'à une région proche du bord de fuite 17. En fait, la surface gyroïde 18 s'arrête, suivant la corde la pale 14, en un point où le profil de la pale 14 devient très mince. Suivant la direction radiale X, cela détermine une ligne 20 suivant le voisinage du bord de fuite 17.

Dans cette région, des ailettes 21 orientées sensiblement de manière transversale relient la surface gyroïde 18 aux parois 15 de la pale 14.

La surface gyroïde 18 de l'exemple de la figure 3 est dimensionnée pour remplir plusieurs fonctions.

Premièrement, elle assure la fabricabilité de l'aube 11 par une méthode additive en l'auto-supportant lors de la fabrication des couches successives. Tout d'abord, comme il a été dit précédemment, la surface gyroïde 18 peut elle-même être fabriquée de manière additive grâce à ses propriétés géométriques. On peut donc fabriquer cette structure à l'intérieur de l'aube 11 sans avoir à utiliser des supports de fabrication dédiés qu'il serait difficile d'éliminer lorsque l'aube est terminée. De plus, si l'on donne à l'aube des formes un peu complexes ou si l'aube 11 comporte plusieurs pales 14 réparties sur un élément de couronne, certaines parties des parois 15 peuvent avoir une surface interne se trouvant dans une position suspendue, avec une inclinaison trop forte par rapport aux plans des couches de fabrication successives. La surface gyroïde 18 forme alors un support pour de telles portions de paroi d'une pale de l'aube.

Deuxièmement, la surface gyroïde 18 forme un échangeur thermique guidant un fluide de refroidissement passant dans la cavité. En référence à la figure 3, le fluide de refroidissement entre dans la cavité par l'ouverture 19 pratiquée dans la plateforme externe 12 et s'échappe par des évents, non représentés, au niveau du bord de fuite 17. Suivant la description succincte qui en a été faite, la surface gyroïde 18 sépare l'espace de la cavité en deux canaux distincts. Chacun de ces canaux a une entrée au niveau de l'ouverture 19 dans la plateforme externe 12. Le flux d'air de refroidissement se sépare donc en deux et entre dans chacun des canaux par cette entrée. Il suit ensuite un chemin complexe dans chaque canal sur toute l'extension longitudinale de la pale 14. Comme on le voit sur la figure 3, en intersectant la surface gyroïde 18 les parois 15 de la pale 14 forment elles-mêmes une partie des parois desdits canaux. La surface gyroïde 18 s'arrêtant à distance du bord de fuite 17, les deux canaux ont une sortie au niveau du bord de fuite 17. L'air de refroidissement ressort par cette sortie et est guidé vers les évents du bord de fuite 17.

Du point de vue de la performance d'échange thermique, la surface gyroïde 18 a un premier effet en guidant le flux d'air vers les surfaces internes des parois 15 de la pale 14. Le flux d'air refroidit ainsi les parois 15 par convection, en les longeant. En second lieu, la surface gyroïde 18 maximise la surface d'échange avec le flux d'air de refroidissement. De préférence, la surface gyroïde 18 est fabriquée en un matériau métallique conducteur de la chaleur, similaire à celui des parois 15 de la pale 14. Etant en contact avec les parois 15, la surface gyroïde 18 forme donc elle-même un radiateur qui pompe la chaleur des parois 15 pour l'évacuer dans le flux d'air de refroidissement.

Selon un autre point de vue, la surface gyroïde intervient sur la performance en termes de perte de charge pour le flux d'air de refroidissement. Pour minimiser la perte de charge, l'homme du métier peut jouer sur le ratio entre la taille de la maille élémentaire et l'épaisseur de paroi de la surface gyroïde 18.

Par ailleurs, la conception de la surface gyroïde 18 doit tenir compte de sa tenue mécanique dans l'aube 11 en fonctionnement. Pour cela l'homme du métier ajustera aussi le ratio entre la taille de la maille élémentaire et l'épaisseur de paroi de la surface gyroïde 18. Il définira aussi des congés de raccordement aux intersections avec les parois 15 et concevra des formes travaillées pour la tenue mécanique afin d'assurer la durabilité de l'installation de la surface gyroïde 18 à l'intérieur de l'aube 11. Les ailettes 21 représentées sur la figure 3 font partie de ces structures.

En vue d'optimiser les performances ou contraintes qui viennent d'être citées, des variantes de réalisation peuvent être envisagées.

En référence, à la figure 6, la taille de la maille peut être évolutive suivant les différentes directions d'espace dans la cavité. En l'occurrence, sur la figure 6, la taille de la maille de la surface gyroïde 18' est grande au centre de la cavité et diminue lorsqu'on se rapproche des parois 15 de la pale 14. On peut juger de la taille de la maille par celle des ouvertures quasi circulaires formées par la surface gyroïde 18' dans le plan de coupe transversal. Cette configuration permet notamment de définir pour chacun des deux canaux un passage central de grand diamètre par lequel le flux d'air de refroidissement peut traverser facilement la pale dans la direction radiale X avant de diffuser vers les parois 15 par les petites mailles sur toute l'extension longitudinale de la pale. On peut ainsi mieux maîtriser la répartition de l'air de refroidissement sur l'extension longitudinale de la pale 14 pour refroidir les zones exposées à l'air le plus chaud dans la veine.

Sur la figure 6, l'épaisseur de paroi de la surface gyroïde varie également en diminuant du centre vers les parois. Ici, dans la zone 22 indiquée par le cerclage en trait pointillé, l'épaisseur est plus forte autour des grandes ouvertures. Des considérations de tenue mécanique pour les grosses mailles sont prises en compte, ainsi que l'optimisation des échanges thermiques près des parois 15, pour ajuster l'épaisseur de la surface gyroïde.

En référence à la figure 7, un insert 23 est introduit dans la cavité, entre les parois 15. Dans ce cas, la surface gyroïde, non représenté sur la figure, remplit l'espace défini entre les surfaces internes des parois 15 et la surface externe de l'insert 23. Avantageusement, l'insert 23 est creux et débouche dans la plateforme externe 12. Il est alors équipé d'ouvertures, non représentées, traversant ses parois le long de son extension longitudinale dans la cavité. Ces ouvertures débouchent dans les canaux de la surface gyroïde. L'insert 23 est alors dimensionné pour répartir sur l'extension longitudinale de la pale 14 un flux d'air alimentant les canaux du gyroïde. L'insert 23 fonctionne alors un peu comme les mailles de grande dimension dans la variante précédente. On notera par ailleurs que la présence de la surface gyroïde permet de concevoir des formes d'insert 23 complexes sans nuire à la fabricabilité par une méthode additive, puisque cette surface gyroïde assurera le supportage de l'insert 23. Les exemples présentés ne sont pas limitatifs. D'autres variantes combinant les variations de taille de maille et d'épaisseur de paroi de la surface gyroïde, ainsi que de forme ou de fonction d'un éventuel insert associé, sont couvertes par l'invention.

**Revendications**

1. Aube (11) creuse de turbomachine, comportant au moins une pale (14) ayant des parois latérales (15) destinées à guider autour de la pale un écoulement dans une veine et fixées sur une première plateforme (12) à une première extrémité longitudinale de la pale(14), la pale (14) comportant en outre une cavité interne entre les parois latérales (15), destinée à faire passer un fluide de refroidissement de la pale, avec une ouverture (19) d'arrivée du fluide débouchant au travers de ladite première plateforme (12), **caractérisée en ce qu'**un réseau de surface gyroïde (18) remplit au moins une partie de la cavité en étant agencé pour y guider le fluide de refroidissement et est en contact avec au moins une partie des parois latérales (15).

2. Aube (11) selon la revendication 1, **caractérisée en ce que** le réseau de surface gyroïde (18) s'étend sur la totalité de l'extension longitudinale de la pale (14) et débouche dans l'ouverture (19) pratiquée dans la première plateforme (12), de manière à guider le flux de fluide de refroidissement dès son arrivée dans la pale (14).

3. Aube (11) selon la revendication 1 ou 2, **caractérisée en ce que** les parois latérales (15) de la pale (14) sont fixées sur une deuxième plateforme (13), à une deuxième extrémité longitudinale, et **en ce que** le réseau de surface gyroïde (18) est en appui sur la deuxième plateforme (13), entre les parois latérales (15).

4. Aube (11) selon l'une des revendications 1 à 3, **caractérisée en ce que**, le réseau de surface gyroïde (18) séparant l'espace en deux canaux séparés par lesquels le fluide de refroidissement peut s'écouler, les parois latérales (15) de la pale (14) forment une partie des parois desdits canaux en coupant le réseau de surface gyroïde (18).

5. Aube (11) selon l'une des revendications 1 à 4, **caractérisée en ce que**, le réseau de surface gyroïde (18) étant formé à partir d'une maille cubique élémentaire, la taille de la maille évolue en fonction de la position dans la cavité, par exemple diminue du centre de la cavité vers les parois latérales (15).

6. Aube (11) selon l'une des revendications 1 à 5, **caractérisée en ce que** l'épaisseur de paroi de la surface gyroïde (18) est variable, par exemple diminue du centre de la cavité vers les parois latérales (15).

7. Aube (11) selon l'une des revendications 1 à 6, **caractérisée en ce qu'**elle comprend un insert (23) dans la cavité et que le réseau de surface gyroïde (18) occupe un espace situé entre l'insert (23) et les parois latérales (15) de la pale (14).

8. Aube (11) selon l'une des revendications 1 à 3 et 6, **caractérisée en ce qu'**elle est formée d'une seule pièce obtenue par fabrication additive.

9. Aube (11) selon l'une des revendications 1 à 8, **caractérisée en ce que** l'aube (11) comporte des appendices tels que pontets, picots, ailettes, trous, en contact avec le réseau de surface gyroïde (18).

10. Aube (11) selon l'une des revendications 1 à 9, **caractérisée en ce que** l'aube (11) est formée d'une seule pièce obtenue par fabrication additive.

11. Stator aubagé de turbomachine, notamment un distributeur de turbine haute pression, comprenant une aube (11) selon l'une des revendications 1 à 10.

12. Turbomachine comprenant une aube (11) selon l'une des revendications 1 à 10 ou comprenant un stator aubagé selon la revendication 11.

**Patentansprüche**

1. Hohlschaufel (11) für eine Turbomaschine, die mindestens ein Blatt (14) umfasst, das Seitenwände (15) aufweist, die dazu bestimmt sind, eine Strömung um das Blatt herum in eine Leitung zu führen, und an einer ersten Plattform (12) an einem ersten Längsende des Blatts (14) befestigt sind, wobei das Blatt (14) weiter einen inneren Hohlraum zwischen den Seitenwänden (15) umfasst, der dazu bestimmt ist, ein Kühlfluid für das Blatt durchzulassen, mit einer Eintrittsöffnung (19) für das Fluid, die durch die erste Plattform (12) mündet, **dadurch gekennzeichnet, dass** ein Gyroidflächennetz (18) mindestens einen Teil des Hohlraums ausfüllt, wobei dieses so eingerichtet ist, dass es das Kühlfluid darin führt, und mit mindestens einem Teil der Seitenwände (15) in Kontakt steht.

2. Schaufel (11) nach Anspruch 1, **dadurch gekennzeichnet, dass** sich das Gyroidflächennetz (18) über die gesamte Längserstreckung des Blatts (14) erstreckt und in der Öffnung (19) mündet, die in der ersten Plattform (12) ausgebildet ist, um den Kühlfluidstrom unmittelbar ab seinem Eintritt in das Blatt (14) zu führen.

3. Schaufel (11) nach Anspruch 1 oder 2, **dadurch gekennzeichnet, dass** die Seitenwände (15) des Blatts (14) an einer zweiten Plattform (13), an einem zweiten Längsende, befestigt sind und dadurch, dass das Gyroidflächennetz (18) an der zweiten Plattform (13), zwischen den Seitenwänden (15), anliegt.

4. Schaufel (11) nach einem der Ansprüche 1 bis 3, **dadurch gekennzeichnet, dass**, da das Gyroidflächennetz (18) den Raum in zwei getrennte Kanäle trennt, durch die das Kühlfluid strömen kann, die Seitenwände (15) des Blatts (14) einen Teil der Wände der Kanäle bilden, indem sie das Gyroidflächennetz (18) schneiden.

5. Schaufel (11) nach einem der Ansprüche 1 bis 4, **dadurch gekennzeichnet, dass**, da das Gyroidflächennetz (18) aus einer kubischen Elementarzelle gebildet ist, die Größe der Zelle sich in Abhängigkeit von der Position im Hohlraum ändert, zum Beispiel von der Mitte des Hohlraums zu den Seitenwänden (15) hin abnimmt.

6. Schaufel (11) nach einem der Ansprüche 1 bis 5, **dadurch gekennzeichnet, dass** die Wanddicke der Gyroidfläche (18) variabel ist, zum Beispiel von der Mitte des Hohlraums zu den Seitenwänden (15) hin abnimmt.

7. Schaufel (11) nach einem der Ansprüche 1 bis 6, **dadurch gekennzeichnet, dass** sie einen Einsatz (23) in dem Hohlraum umfasst und dass das Gyroidflächennetz (18) einen Raum einnimmt, der sich zwischen dem Einsatz (23) und den Seitenwänden (15) des Blatts (14) befindet.

8. Schaufel (11) nach einem der Ansprüche 1 bis 3 und 6, **dadurch gekennzeichnet, dass** sie aus einem einzigen, durch additive Fertigung erhaltenen Stück gebildet ist.

9. Schaufel (11) nach einem der Ansprüche 1 bis 8, **dadurch gekennzeichnet, dass** die Schaufel (11) Fortsätze wie etwa Stege, Noppen, Rippen, Löcher umfasst, die mit dem Gyroidflächennetz (18) in Kontakt stehen.

10. Schaufel (11) nach einem der Ansprüche 1 bis 9, **dadurch gekennzeichnet, dass** die Schaufel (11) aus einem einzigen, durch additive Fertigung erhaltenen Stück gebildet ist.

11. Beschaufelter Stator für eine Turbomaschine, insbesondere eine Hochdruckturbinendüse, der eine Schaufel (11) nach einem der Ansprüche 1 bis 10 umfasst.

12. Turbomaschine, die eine Schaufel (11) nach einem der Ansprüche 1 bis 10 umfasst oder einen beschaufelten Stator nach Anspruch 11 umfasst.

**Claims**

1. A turbomachine hollow vane (11), comprising at least one blade (14) having lateral walls (15) which are intended to guide a flow in a duct around the vane and which are attached on a first platform (12) at a first longitudinal end of the blade (14), the blade (14) further comprising an internal cavity between the lateral walls (15), which cavity is intended for passing a fluid for cooling the blade, with an opening (19) for the inlet of the fluid opening through said first platform (12), **characterised in that** a gyroid surface array (18) fills at least one portion of the cavity and is arranged to guide the cooling fluid therein and is in contact with at least one portion of the lateral walls (15).

2. The vane (11) according to claim 1, **characterised in that** the gyroid surface array (18) extends over the entire longitudinal extension of the blade (14) and opens into the opening (19) embodied in the first platform (12), so as to guide the flow of cooling fluid as soon as it arrives in the blade (14).

3. The vane (11) according to claim 1 or 2, **characterised in that** the lateral walls (15) of the blade (14) are attached to a second platform (13), at a second longitudinal end, and **in that** the gyroid surface array (18) is in abutment on the second platform (13), between the lateral walls (15).

4. The vane (11) according to any of claims 1 to 3, **characterised in that**, the gyroid surface array (18) separating the space into two separate channels through which the cooling fluid can flow, the lateral walls (15) of the blade (14) form a portion of the walls of said channels by intersecting the gyroid surface array (18).

5. The vane (11) according to one of claims 1 to 4, **characterised in that**, the gyroid surface array (18) being formed from an elementary cubic unit cell, the size of the unit cell evolves as a function of the position in the cavity, e.g. decreases from the centre of the cavity towards the lateral walls (15).

6. The vane (11) according to any of claims 1 to 5, **characterised in that** the wall thickness of the gyroid surface (18) is variable, e.g. decreases from the centre of the cavity towards the lateral walls (15).

7. The vane (11) according to any of claims 1 to 6, **characterised in that** it comprises an insert (23) in the cavity and that the gyroid surface array (18) occupies a space located between the insert (23) and the lateral walls (15) of the blade (14).

8. The vane (11) according to one of claims 1 to 3 and 6, **characterised in that** it is formed of a single part obtained by additive manufacturing.

9. The vane (11) according to one of claims 1 to 8, **characterised in that** the vane (11) comprises appendices such as bridges, spikes, fins, holes, in contact with the gyroid surface array (18).

10. The vane (11) according to any of claims 1 to 9, **characterised in that** the vane (11) is formed from a single part obtained by additive manufacturing.

11. A turbomachine bladed stator, in particular a high-pressure turbine stator, comprising a vane (11) according to any of claims 1 to 10.

12. A turbomachine comprising a vane (11) according to any of claims 1 to 10 or comprising a bladed stator according to claim 11.

**FIG. 1**

**FIG. 2**

**FIG. 3**

**FIG. 4**

**FIG. 5**

**FIG. 6**

**FIG. 7**

**EP 4 118 304 B1**

## RÉFÉRENCES CITÉES DANS LA DESCRIPTION

**Documents brevets cités dans la description**

- US 20140079540 A1